# FASCICULE DE BREVET EUROPEEN

(11) **EP 0 431 986 B1**
(45) Date de publication et mention de la délivrance du brevet: **14.07.1993**
(21) Numéro de dépôt: 90402875.0
(22) Date de dépôt: 15.10.1990
(51) Int. Cl.: B62D 25/14

(54) **Pièce de structure perfectionnée pour véhicule et son application à un assemblage automatique**
Verbessertes Strukturteil für ein Fahrzeug und seine Verwendung bei einer automatischen Montage
Improved structural part for a vehicle and its use for an automatic assemblage

(30) Priorité: 06.12.1989 FR 8916125
(43) Date de publication de la demande: 12.06.1991
(73) Titulaire: ECIA - EQUIPEMENTS ET COMPOSANTS POUR L'INDUSTRIE AUTOMOBILE, F-25400 Audincourt (FR)
(72) Inventeur: Henigue, Christian, F-90000 Belfort (FR); Peugeot, Michel, F-25230 Seloncourt (FR)
(74) Mandataire: Mestre, Jean (FR)

(56) Documents cités:
- FR-A- 2 614 257

## Description

La présente invention concerne les véhicules automobiles et, plus particulièrement, une pièce perfectionnée de structure destinée à y être fixée automatiquement, plus spécialement par l'entremise d'une cloison.

Comme on le sait, les véhicules contemporains, en particulier ceux dits de "tourisme", sont constitués d'une architecture tenant lieu de coque et/ou de châssis, obtenue essentiellement à partir d'éléments métalliques faits de tôle relativement mince et emboutis, découpés et soudés.

Une telle architecture comprend, notamment, des traverses qui, entre autre, contribuent à séparer le compartiment antérieur, souvent moteur, de l'habitacle. Ces traverses portent, habituellement, une cloison et divers socles et consoles auxquels sont fixés des sous-ensembles variés.

Ces socles ou consoles sont, traditionnellement, faits à partir de constituants emboutis dans des tôles métalliques, qui sont assemblés pour former des entités mécanosoudées.

Ces socles et consoles qui sont, par exemple, destinés à porter des sous-ensembles tels que la colonne de direction éventuellement avec son dispositif anti-vol, un jeu de pédales d'accélérateur, de frein et, s'il y a lieu, d'embrayage et d'autres commandes pour le lave-vitre ou pour les feux de signalisation ou de conduite ainsi que des connecteurs pour recevoir différents autres accessoires, sont rapportés sur ces traverses.

La technique traditionnelle d'assemblage est telle que ces socles et consoles sont d'abord fixés "nus" sur les traverses par toute technique classique appropriée, par exemple vissage, soudage, rivetage ou collage. Ceci fait, on peut alors y rapporter pour les "habiller" les sous-ensembles dont il a été question précédemment tels que ces colonne de direction, jeu de pédales, commutateurs et connecteurs. On voit donc qu'un tel processus de construction oblige à monter de tels sous-ensembles sur leur console, socle respectif qui ont été préalablement associés à ces traverses et cloisons.

La géométrie de l'habitacle d'un véhicule est telle que lorsque ces socles et consoles sont en place sur les traverse et cloison, leur accès pour y fixer les sous-ensembles qu'ils doivent recevoir est le plus souvent particulièrement délicat parce que le volume disponible pour les opérateurs est relativement exigu et, habituellement, d'une localisation peu accessible.

On imagine donc facilement que si le montage dans ces conditions n'est pas aisé pour un opérateur humain doué d'agilité et d'un degré de réflexion associés à un entraînement, il est totalement impraticable si l'on souhaite mettre en oeuvre des techniques automatiques faisant appel à des robots ou à des automates programmables par exemple, et tout spécialement si l'on souhaite opérer selon des cinématiques simples.

Le but de l'invention est de remédier à ces inconvénients en utilisant une pièce de structure perfectionnée pour véhicule automobile destinée à être fixée à ce dernier d'une manière automatique seulement après que l'un au moins des divers sous-ensembles prévus pour lui être associés y a été monté.

L'invention a pour objet une pièce perfectionnée de structure pour véhicule automobile destinée à être fixée à ce dernier et, plus particulièrement, à une cloison de celui-ci séparant un compartiment antérieur d'un habitacle, qui est faite d'un seul tenant, qui présente une configuration en coque à alvéoles et orifices, qui est apte à recevoir entre autres une colonne de direction, un dispositif anti-vol, un jeu de pédales de commande, au moins un commutateur multiple, des connecteurs (voir FR-A-2614257) et qui est caractérisée en ce qu'elle comprend une chambre tubulaire avec un axe pour servir de support de palier pour la colonne de direction, un réceptacle cylindrique avec un axe pour recevoir le dispositif anti-vol, au moins un emplacement au moins localement relativement plan pour recevoir un commutateur multiple, et en ce que cette chambre tubulaire et ce réceptacle cylindrique présentent des axes propres obliques relativement l'un à l'autre.

L'invention a aussi pour objet une application d'une telle pièce selon laquelle après avoir été prééquipée, elle est montée et fixée automatiquement au véhicule à l'aide d'un robot ou d'un automate programmable ou analogue.

D'autres caractéristiques de l'invention apparaîtront à la lecture de la description et des revendications qui suivent, et à l'examen du dessin annexé, donné seulement à titre d'exemple, où:
- la Figure 1 est une vue perspective schématique, partielle, d'un mode de réalisation d'une pièce perfectionnée de structure suivant l'invention prééquipée et montée sur un véhicule, observée du côté habitacle;

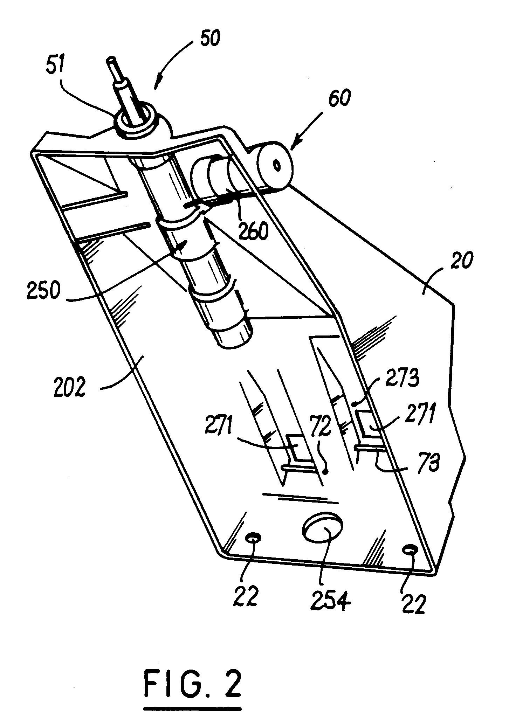

- la Figure 2 est une vue analogue à celle de la Figure 1 de la pièce, partiellement prééquipée, seule;
- la Figure 3 est une vue de cette même pièce, nue, montrant plus particulièrement une partie de la face de cette dernière appelée à être dirigée vers le compartiment antérieur; et
- la Figure 4 est une autre vue de cette même face du mode de réalisation de la Figure 1 de la pièce selon l'invention équipée de sa barre de montage.

Les techniques d'assemblage des constituants des véhicules automobiles sont bien connues, en particulier des spécialistes de ce secteur d'activité industrielle. C'est pourquoi, la description qui suit sera limitée à ce qui concerne directement ou indirectement l'invention. Le surplus fait partie des solutions classiques courantes parmi lesquelles l'homme du métier puisera pour faire face aux situations particulières auxquelles il est confronté.

Dans ce qui suit, un même numéro de référence désigne toujours un élément homologue quel que soit le mode de réalisation.

Comme on le voit sur les diverses figures du dessin, une pièce de structure 20 perfectionnée pour véhicule automobile selon l'invention, est destinée à être fixée au véhicule, par exemple, par l'entremise d'une cloison 10 ou analogue qui sépare un compartiment 11 antérieur par exemple moteur, d'un habitacle 12. Cette cloison 10 est apte à séparer physiquement et acoustiquement l'habitacle du compartiment antérieur et peut recevoir des éléments et sous-ensembles car elle est aussi "autoportante".

Comme on l'observe, la pièce 20 se présente sous la forme générale d'une coque dont la configuration présente des alvéoles et des orifices: des surfaces d'appui et/ou des ouvertures et/ou des orifices et passages, comme cela ressort de ce qui suit.

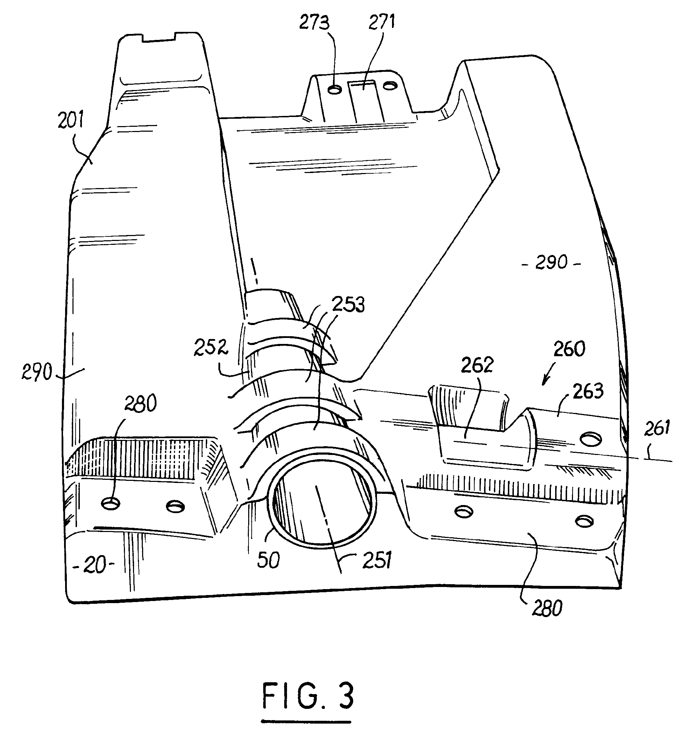

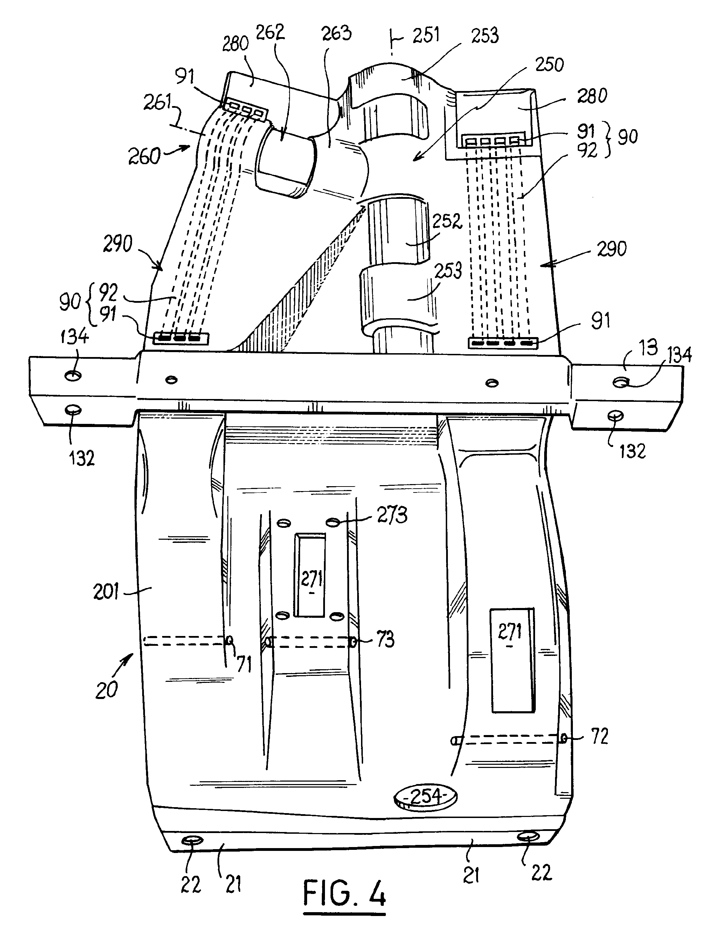

En regardant, par exemple, les Figures 3 et 4, on voit que la pièce 20 présente sur sa face 201 extérieure, des méplats 21 avec des orifices 22 et ménage une chambre 250 tubulaire d'axe 251. Cette chambre 250 est constituée, comme illustré, d'au moins une douille 252 à section droite pratiquement circulaire et d'au moins un fourreau 253 à section droite pratiquement demi-circulaire. Cette chambre 250 est destinée à servir de support de palier pour une colonne de direction 50 et, plus particulièrement, pour son fût 51. La pièce 20 à l'opposé de la chambre 250 et, de préférence, pratiquement dans l'alignement de l'axe 251 de cette dernière est transpercée d'un ajour 254 permettant le passage de la colonne de direction.

Sur la face extérieure 201 de la pièce 20 selon l'invention est aussi ménagé un réceptacle 260 cylindrique d'axe 261. Ce réceptacle 260 est constitué, comme illustré, d'au moins une douille 262 à section droite pratiquement circulaire et d'au moins un fourreau 263 à section droite pratiquement demi-circulaire. Ce réceptacle 260 est destiné à recevoir un dispositif anti-vol 60. Comme on peut l'observer sur les figures du dessin, les axes 251 et 261 propres à chacun de ces chambre et réceptacle, sont obliques relativement l'un à l'autre.

Sur cette même face 201 de la pièce 20 est aussi ménagée au moins un emplacement 280, relativement plan, destiné à recevoir au moins un commutateur multiple 80 appelé couramment "comodo" pour la commande des feux lumineux d'éclairage et de signalisation, de l'avertisseur sonore,..., notamment.

Cette colonne de direction, qui peut être aussi normalement équipée de son volant non représenté, ce dispositif anti-vol et ces commutateurs de tout type courant approprié, sont montés comme il est classique sur la pièce selon l'invention, par exemple par emmanchement pour les premiers et par vissage pour les seconds.

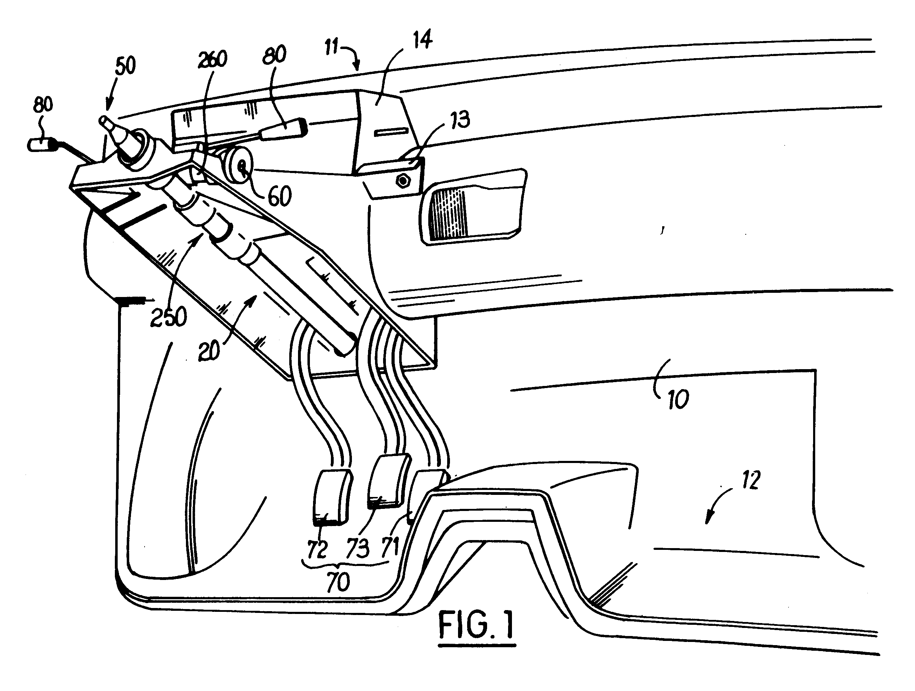

Comme on le voit, en particulier, en examinant les figures du dessin, la pièce 20 comprend aussi au moins un passage 271 et des points de fixation 273 pour certaines pédales d'un jeu de pédales et leurs accessoires. Ce jeu de pédales comprend, entre autres, par exemple, une pédale d'accélérateur 71, une pédale d'embrayage 72 avec leur câble et gaine de liaison, et une pédale de frein 73 associée éventuellement à un système d'assistance au freinage non représenté grâce à une monture. Ce sont cette pédale 73 qui traverse ce passage 271 et ce système d'assistance au freinage qui utilise ces points de fixation 273. Ce jeu de pédales peut comprendre aussi d'autres commandes pour la mise en oeuvre d'un lave-vitre et/ou pour l'inversion des feux de croisement-feux de route. En examinant les figures du dessin et en particulier la Figure 1, on observera que la monture de ce système d'assistance au freinage et la colonne de direction sont destinées à être placées sur les faces 201 et 202, opposées, de la pièce 20.

On observera aussi que les axes de basculement 710, 720 et 730 de ces pédales 71, 72 et 73 respectivement, sont de préférence noyés, dans cette pièce; ces axes constituent des prisonniers, des "inserts" qui sont incorporés à la pièce 20.

Cette pièce 20 comprend, aussi au moins une région de support 290 de préférence avec une surface développable au sens mathématique de ce dernier terme, destinée à recevoir des connecteurs 90 avec une embase 91 ou analogue qui porte au moins un contacteur (broches ou fiches) de tout type classique approprié. A ces contacteurs, à embrochage automatique de préférence, sont associés des conducteurs 92 avec leurs isolants éventuellement reliés par exemple à un boîtier de servitude 14 à fusibles et/ou relais, à des raccords destinés à assurer des jonctions électriques avec d'autres circuits du véhicule et aussi, s'il y a lieu, avec des éléments du tableau de bord, non illustrés. Tout ceci apparaît clairement à l'examen des figures. Ces connecteurs 90 peuvent être inclus ou noyés dans la pièce 20 lors de sa fabrication ou bien surmoulés sur cette dernière après sa fabrication, voire rapportés sur cette pièce par toute technique appropriée, par exemple par collage, s'ils sont préfabriqués indépendamment.

On voit donc que, grâce à la pièce de structure suivant l'invention, il est possible de lui associer alors même qu'elle est encore hors du véhicule proprement dit, tout ou partie des sous-ensembles qu'elle est destinée à recevoir tels que par exemple une colonne de direction, un dispositif anti-vol, un jeu de pédales, au moins un commutateur, des connecteurs,..., dont il a été question précédemment. Une fois ces sous-ensembles montés sur la pièce de structure suivant l'invention, on peut présenter cette dernière ainsi toute prééquipée dans l'habitacle et, une fois correctement orientée, la placer contre les traverses et/ou cloison destinées à la supporter. La pièce est alors maintenue, par exemple, par vissage ou par toute autre technique analogue appropriée grâce à ces méplats 21 et orifices 22. La pièce est maintenue en place directement sur ces traverses et/ou cloison ou au moins partiellement indirectement par l'intermédiaire d'une barre de montage 13 illustrée par exemple sur la Figure 4. Cette barre 13 est transpercée de trous 132 pour son maintien sur ces traverses et/ou cloison et d'alésages 134 pour la fixation du boîtier de servitude 14. On observera que, de préférence, la direction propre de ces trous 132 et orifices 22 est la même de manière à permettre une présentation et une fixation de la pièce 20 selon l'invention en suivant une cinématique simple. De plus, cette barre de montage peut être d'une conception telle qu'elle sert d'absorbeurs d'énergie pour contribuer à la sécurité en cas de choc violent à composante axiale importante ou bien de tels absorbeurs d'énergie sont interposés entre cette barre et ces traverses et/ou cloisons. Cette barre est maintenue par exemple par vissage.

La pièce de structure suivant l'invention qui se présente à la manière d'une coque monobloc à configuration complexe est obtenue, par exemple, par moulage ou formage. On utilise alors, par exemple, des matières synthétiques telles que des résines, éventuellement après avoir chargé ces dernières avec des substances appropriées telles que des fibres, par exemple en verre ou en carbone, pour leur conférer les propriétés mécaniques et/ou physiques particulières recherchées. Il est clair que cette constitution n'est pas la seule utilisable et qu'on peut fabriquer aussi cette pièce à partir d'un feuillard métallique approprié, par exemple en acier, correctement embouti et découpé à l'aide des techniques traditionnelles ou à partir d'un alliage coulé, par exemple à base d'aluminium.

Lorsqu'on se sert de résines synthétiques, on utilise des matériaux thermoplastiques renforcés estampables (TRE) mis en forme par compression du type de ceux connus sur le marché sous la désignation SYMALIT ou "Glass Mat Thermoplastic" (GMT) ou STC (Structural Thermoplastic Composite), ou bien des polyesters mis en forme par compression du type des Sheet Molding Compound (SMC) assouplis chargés à 30-40-60%, voire des polyamides mis en oeuvre par injection et chargés de fibres de verre.

De préférence, les connecteurs sont surmoulés sur la région de support de la pièce.

On voit donc qu'il est possible de placer la pièce de structure selon l'invention, de préférence préalablement toute équipée dans l'habitacle à l'aide de techniques automatiques faisant appel à des robots ou à des automates programmables puisqu'elle se présente à la manière d'une entité prééquipée de mise en place et de fixation aisées.

On saisit immédiatement tout l'intérêt de l'invention pour les lignes d'assemblage des véhicules produits spécialement en grandes séries.

## Revendications

1. Pièce de structure pour véhicule automobile destinée à être fixée à ce dernier et, plus particulièrement à une cloison (10) de celui-ci séparant un compartiment antérieur d'un habitacle (12), qui est faite d'un seul tenant qui présente une configuration en coque à alvéoles et orifices, qui est apte à recevoir, entre autres, une colonne de direction (50), un dispositif anti-vol (60), un jeu de pédales de commande (71,72,73), au moins un commutateur multiple (80), des connecteurs, et qui est caractérisée en ce qu'elle comprend une chambre (250) tubulaire d'axe (251) destinée à servir de support de palier pour la colonne de direction, un réceptacle (260) cylindrique d'axe (261) pour recevoir le dispositif anti-vol, au moins un emplacement (280) relativement plan destiné à recevoir un commutateur multiple, et en ce que ces chambre tubulaire (250) et réceptable cylindrique (260) ont des axes (251, 261) obliques relativement l'un à l'autre.

2. Pièce selon la revendication 1, caractérisée en ce que la chambre (250) est constituée d'au moins une douille (252) à section droite pratiquement circulaire et d'au moins un fourreau (253) à section droite pratiquement demi-circulaire.

3. Pièce selon l'une quelconque des revendications 1 et 2, caractérisée en ce que le réceptacle (260) est constitué d'au moins une douille (262) à section droite pratiquement circulaire et d'au moins un fourreau (263) à section droite pratiquement demi-circulaire.

4. Pièce selon l'une quelconque des revendications 1 et 3, caractérisée en ce qu'elle est pourvue d'au moins un passage (271) pour une pédale d'un jeu de pédales de commande (70) et de points de fixation (273) pour une monture d'un système d'assistance au freinage.

5. Pièce selon l'une quelconque des revendications 1 à 4, caractérisée en ce qu'elle est pourvue d'au moins un axe de basculement (710, 720, 730) pour une pédale d'un jeu de pédales de commande (70).

6. Pièce selon l'une quelconque des revendications 1 et 5, caractérisée en ce qu'elle comprend au moins une région de support (290) à surface localement développable destinée à recevoir des connecteurs (90).

7. Pièce selon la revendication 6, caractérisée en ce que les connecteurs (90) sont noyés, surmoulés voire rapportés dans cette région (290).

8. Pièce conforme à l'une quelconque des revendications 1 et 7, caractérisée en ce qu'elle est obtenue par moulage.

9. Pièce conforme à l'une quelconque des revendications 1 et 8, caractérisée en ce qu'elle est faite en au moins une résine synthétique modifiée par des fibres et/ou des charges.

10. Application d'une pièce conforme à l'une quelconque des revendications 1 à 9, où prééquipée elle est montée et fixée automatiquement au véhicule.

## Claims

1. A structural part for a motor vehicle intended to be fixed to the latter and, more particularly, to a partition (10) thereof separating a front compartment from a passenger space (12), being formed of a single piece shaped in the manner of a shell having cells and openings and being suitable for receiving, among other things, a steering column (50), an anti-theft device (60), a set of control pedals (71, 72, 73), at least one multiple switch (80) and connectors, characterised in that it comprises a tubular chamber (250) having an axis (251) and intended to serve as a bearing support for the steering column, a cylindrical receptacle (260) having an axis (261) and intended to receive the anti-theft device, and at least one relatively flat area (280) intended to receive a multiple switch, and in that the said tubular chamber (250) and cylindrical receptacle (260) have axes (251, 261) which are oblique relative to each other.

2. A part according to claim 1, characterised in that the chamber (250) is formed from at least one socket (252) of substantially circular cross-section and at least one sleeve (253) of substantially semi-circular cross-section.

3. A part according to either one of claims 1 and 2, characterised in that the receptacle (260) is formed from at least one socket (262) of substantially circular cross-section and at least one sleeve (263) of substantially semi-circular cross-section.

4. A part according to either one of claims 1 and 3, characterised in that it is provided with at least one passage hole (271 ) for a pedal of a set of control pedals (70) and with fastening points (273) for a mounting of an assisted braking system.

5. A part according to any one of claims 1 to 4, characterised in that it is provided with at least one tilting axle (710, 720, 730) for a pedal of a set of control pedals (70).

6. A part according to either one of claims 1 and 5, characterised in that it comprises at least one supporting region (290) having a locally developable surface intended to receive connectors (90).

7. A part according to claim 6, characterised in that the connectors (90) are embedded, moulded or even inserted into this region (290).

8. A part according to either one of claims 1 and 7, characterised in that it is obtained by moulding.

9. A part according to either one of claims 1 and 8, characterised in that it is formed from at least one synthetic resin modified by fibres and/or fillers.

10. Use of a part according to any one of claims 1 to 9, which when pre-fitted is automatically mounted and fixed to the vehicle.

## Patentansprüche

1. Strukturelement für ein Kraftfahrzeug, bestimmt zur Befestigung an demselben, insbesondere an einer Zwischenwand (10) desselben, die ein vorderes Abteil von einer Fahrgastzelle (12) trennt, welches in einem Stück hergestellt ist, welches die Konfiguration einer Schale mit Kammern und Öffnun gen aufweist, welches dazu geeignet ist, unter anderem eine Lenksäule (50), eine Diebstahlsicherung (60), einen Steuer-Pedalsatz (71,72,73), wenigstens einen Vielfachschalter (80) und Anschlüsse aufzunehmen, und das dadurch gekennzeichnet ist, daß es eine rohrförmige Kammer (250) mit einer Achse (251), die als Lagerträger für die Lenksäule bestimmt ist, eine zylindrische Aufnahme (260) mit einer Achse (261) zur Aufnahme der Diebstahlsicherung, und wenigstens eine relativ ebene Montagestelle (280) zur Aufnahme eines Vielfachschalters aufweist, und daß diese rohrförmige Kammer (250) und zylindrische Aufnahme (260) schräg zueinander verlaufende Achsen (251,261) besitzen.

2. Teil nach Anspruch 1, dadurch **gekennzeichnet**, daß die Kammer (250) durch wenigstens einen Ring (252) mit im wesentlichen kreisförmigem Querschnitt und wenigstens eine Hülse (253) mit im wesentlichen halbkreisförmigem Querschnitt gebildet wird.

3. Teil nach Anspruch 1 oder 2, dadurch **gekennzeichnet**, daß die Aufnahme (260) durch wenigstens einen Ring (262) mit im wesentlichen kreisförmigem Querschnitt und wenigstens eine Hülse (263) mit im wesentlichen halbkreisförmigem Querschnitt gebildet wird.

4. Teil nach einem der Ansprüche 1 bis 3, dadurch **gekennzeichnet**, daß es mit wenigstens einem Durchlaß (271) für ein Pedal eines Steuer-Pedalsatzes (70) und mit Befestigungspunkten (273) für eine Halterung eines Bremskraftverstärkers versehen ist.

5. Teil nach einem der Ansprüche 1 bis 4, dadurch **gekennzeichnet**, daß es mit wenigstens einer Schwenkachse (710,720,730) für ein Pedal eines Steuer-Pedalsatzes (70) versehen ist.

6. Teil nach einem der Ansprüche 1 bis 5, dadurch **gekennzeichnet**, daß es wenigstens einen Tragbereich (290) mit lokal abwickelbarer Oberfläche aufweist, der dazu bestimmt ist, Anschlüsse (90) aufzunehmen.

7. Teil nach Anspruch 6, dadurch **gekennzeichnet**, daß die Anschlüsse (90) in diesem Bereich (290) eingebettet, angegossen oder auch angesetzt sind.

8. Teil nach einem der Ansprüche 1 bis 7, dadurch **gekennzeichnet**, daß es durch Formen hergestellt ist.

9. Teil nach einem der Ansprüche 1 bis 8, dadurch **gekennzeichnet**, daß es aus wenigstens einem durch Fasern und/oder Füllstoffe modifizierten Kunstharz hergestellt ist.

10. Verwendung eines Teils nach einem der Ansprüche 1 bis 9, bei der es vorbestückt automatisch an dem Fahrzeug montiert und befestigt wird.
